# EUROPEAN PATENT SPECIFICATION

(11) **EP 0 376 429 B1**
(45) Date of publication and mention of the grant of the patent: **13.10.1993**
(21) Application number: 89301257.5
(22) Date of filing: 09.02.1989
(51) Int. Cl.: H01B 17/00

(54) **Assembly of at least one insulator and a crating therefore**
Zusammenbau von mindestens einem Isolator und einer Verpackung dafür
Ensemble d'au moins un isolateur et un emballage pour celui-ci

(30) Priority: 26.12.1988 JP 325965/88
(43) Date of publication of application: 04.07.1990
(73) Proprietor: NGK INSULATORS, LTD., Nagoya City Aichi Pref. (JP)
(72) Inventor: Kato, Tsugiji, Chiryu City Aichi-pref. (JP); Aoyama, Kunitoshi, Komaki City Aichi-pref. (JP); Kozakai, Motokazu, Kasugai City Aichi Pref. (JP)
(74) Representative: Paget, Hugh Charles Edward

(56) References cited:
- FR-A- 911 616
- US-A- 1 960 901
- US-A- 3 333 685
- Japanese Utility Model laid open No. 58-52145

## Description

This invention relates to cratings for insulators which are suitable for transport of various insulators.

In the transportation of connecting-type suspension insulators, longrod insulators, various bushings or the like, as disclosed, for example, in Japanese Utility Model laid open No. 58-52145 which has been used to delimit the preamble of claim 1, the insulators have hitherto been transported by surrounding a whole of an insulator comprised of the outer periphery of the insulator, the metal fitting thereof and the like with, for example, timbers to form a small-unit insulator crating and then piling a plurality of such small unit insulator cratings one upon another.

In the conventional insulator crating as mentioned above, the insulator is protected by covering the whole of the insulator inclusive of the metal fitting with the timber in a box-like form in order to prevent the damage of the insulator during the transportation. Therefore, when the insulator is mounted on the spot after the transportation, it is necessary to dismantle the whole of the crating to take the insulator from the crating and carry out the mounting of the insulator in a bare state.

For example, in order to mount the insulator on a power transmission tower, transformer or the like outdoors or to connect the insulator to another insulator or to equipment, the crating is first dismantled on ground, and thereafter the insulator is hung on a rope and transported to a given position. As a result, the insulator is apt to be damaged due to the collision with the tower or other equipment, and in extreme cases, the insulator may be broken.

In order to prevent these problems, it is required to wind a previously provided protective member such as blanket, quilting or the like around the surface of the insulator before the mounting of the insulator. In this case, the attachment and detachment of the protective member require much labor.

Moreover, since the conventional crating protects the insulator by covering the whole of the insulator with timbers or the like in a box form, labor for the dismantling is considerable.

US-A-3,333,685 discloses a shipping carton for an insulator. The carton has two open end pockets which are accessible from the outside so that the insulator can be installed with the carton which can be removed later by cutting it away.

US-A-1,960,901 discloses a protecting covering for textile warps. The covering includes a number of plates connected together by flexible strips so as to be fitted around the warp on a beam as a protecting enclosure.

It is, therefore, an object of the invention to solve the aforementioned problems of the conventional techniques and to provide an insulator crating which can completely protect the insulator during transportation. The invention provides for mounting of the insulator in the crated state without exposing the fragile insulator and permits easy dismantling of the crating.

According to the invention, there is provided an assembly of at least one insulator and a crating therefore, as specified in claim 1.

Embodiments of the invention will be described with reference to the accompanying drawings, wherein:
Fig. 1a to 1c are front view, sectional view and side view of a first embodiment of the insulator and crating assembly according to the invention, respectively;
Fig. 2 is a diagrammatic view showing plural plate-like members of hurdle structure before the attachment to the insulator;
Fig. 3 is a partly diagrammatic sectional view of a second embodiment of the insulator and crating assembly according to the invention; and
Fig. 4 is a front view of two insulator and crating assemblies of Fig. 1 connected together.

In the insulator cratings according to the invention, the metallic fittings located at both ends of the insulator extend beyond the plate-like members in the longitudinal direction of the insulator to such an extent that one of these metallic fittings can be connected to a metallic fitting of an insulator in another insulator crating or a connecting portion of the tower or other equipment, so that a transmission line or the like can be attached to the insulator in the crated state without unpacking the insulator and there is caused no damage or breakage of the insulator during the fixing of the insulator. Furthermore, the plural plate-like members extending in the longitudinal direction of the insulator are fixed to the periphery of the insulator by the tying members such as wire or the like, so that the insulator crating can be dismantled in one step by cutting the tying member or untying knots of the tying member. If a knot is untied, recrating can easily be conducted, if necessary. Moreover, at least one engaging member fitting between adjoining shed portions of the insulator or between adjoining insulators is arranged on the inside face of each plate-like member and located between the adjoining suspension insulators or between the adjoining shed portions of the insulator during the crating, whereby the displacement of the plate-like member from the insulator can be prevented during the transportation. Further, breakage or the like of the insulator in transportation is avoided and sliding down of the plate-like members from the insulator can be prevented when the insulator crating is vertically stood up for the mounting of the insulator.

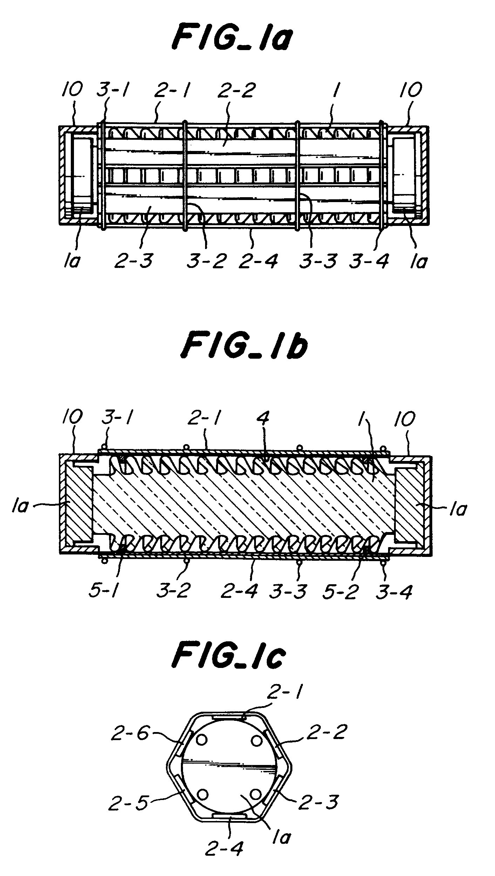

In Figs. 1a to 1c is shown a first embodiment of the insulator and crating according to the invention, wherein six plate-like members 2-1 to 2-6 made from, for example, timbers are arranged around a longrod insulator 1 provided at both ends with metallic fittings 1a for connection and fastened by wires 3-1 to 3-4 as tying members. The longrod insulator 1 is protected by the plate-like members 2-1 to 2-6. Since the metallic fittings 1a located at both end portions of the longrod insulator 1 are completely exposed, this insulator 1 can be easily connected to another insulator 1 without dismantling of the members 2-1 to 2-6. As shown in Fig. 1b, two wooden engaging members 5-1 and 5-2 each fitting between adjoining shed portions of the insulator are arranged at both end portions of each of the plate-like members 2-1 to 2-6 and located between the adjoining shed portions of the longrod insulator 1. After the insulator is set in place at the crated state, the unpacking of such an insulator crating can be conducted in one touch by cutting these wires 3-1 to 3-4 or untying the knots thereof.

In the illustrated embodiment, a transparent vinyl sheet 4 having a thickness of 0.03-0.2 mm extends over the whole periphery of the longrod insulator 1 between each of the plate-like members 2-1 to 2-6 and the insulator 1, whereby the porcelain portion in the insulator 1 can be prevented from pollution. Further, each of the metallic fittings 1a is covered with a cover 10 made from, for example, corrugated fiberboard or the like for the protection of the metallic fitting. Moreover, Fig. 1c shows a side view of the insulator crating before the metallic fitting 1a is covered with the cover 10.

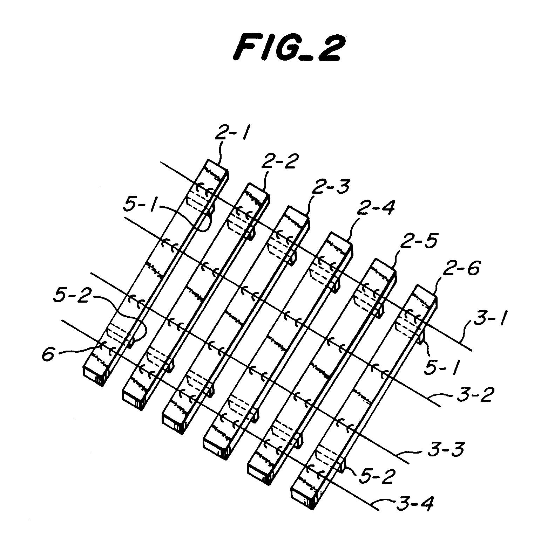

Fig. 2 shows a state before the plate-like members 2-1 to 2-6 made of timbers are attached to the longrod insulator 1 in the formation of the insulator crating as shown in Fig. 1. In this case, the two wooden engaging members 5-1 and 5-2 are arranged at both end portions of each of the plate-like members 2-1 to 2-6, while the wires 3-1 to 3-4 are fixed to each of the plate-like members 2-1 to 2-6 through plural staples 6. The size of the plate-like member is dependent upon the size of the insulator to be transported, but it is preferable that each of the plate-like members 2-1 to 2-6 has a thickness of 3-15 mm and a width of 40-70 mm. Further, the space between the adjoining plate-like members is preferable to be within a range of 25-50 mm, and the total space between these plate-like members 2-1 to 2-6 is favorable to be not more than 30% of the whole periphery surrounding the insulator. On the other hand, a timber of 15-24 mm square is preferably used as each of the engaging members 5-1 and 5-2. Further, a galvanized wire of 1.0-3.0 mm in diameter is preferably used as each of the wires 3-1 to 3-4, and a metal staple of 0.5-2.0 mm in diameter is favorably used as the staple 6.

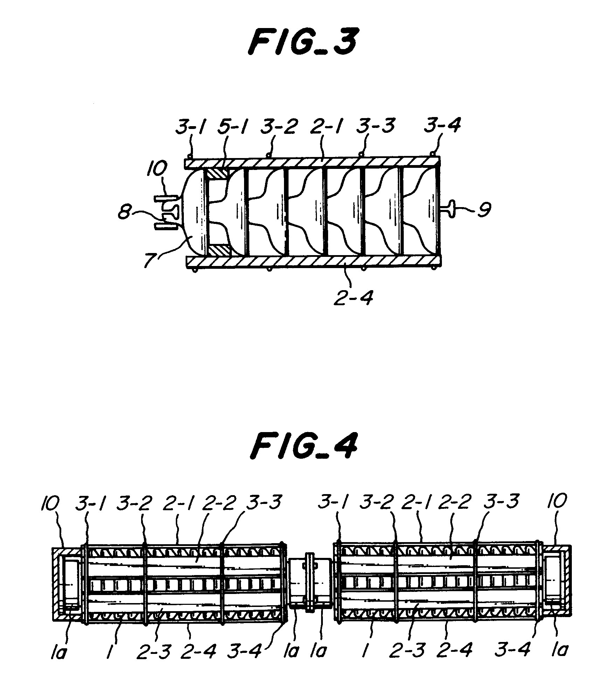

Figs. 3 and 4 show other embodiments of the insulator crating according to the invention, wherein the same members as in Figs. 1a to 1c are represented by the same reference numerals.

In the embodiment of Fig. 3, the insulator to be protected is a connecting-type suspension insulator 7 instead of the longrod insulator 1. The insulator crating according to the invention can be comprised by fastening the plate-like members 2-1 to 2-6 each provided with an engaging member 5-1 fitting between the adjoining suspension insulators 7 around the connected suspension insulators 7 by the wires 3-1 to 3-4. In this case, it is important that an uppermost cap 8 and lowermost pin 9 of the connected suspension insulators 7 are exposed from both ends of the plate-like members 2-1 to 2-6 at such a manner that the cap 8 or pin 9 can be connected to a cap or pin of another crated insulator or another connecting element.

Fig. 4 shows a state of connecting two insulator cratings as shown in Figs. 1a to 1c to each other. In order to connect the metallic fitting 1a of the longrod insulator 1 to a metallic fitting 1a of another longrod insulator 1 through bolts as shown in Fig. 4, since each of the plate-like members 2-1 to 2-6 is not present at the end portions of the longrod insulator 1 containing the metallic fittings 1a, the covers 10 are taken off from the opposed metallic fittings 1a of the longrod insulators 1 in the two transported insulator cratings without decrating for connecting these longrod insulators to each other.

It is apparent that many variations and modifications may be made without departing from the scope of the invention. For example, the numbers of the plate-like members, wires and engaging members used are not limited to those of the aforementioned embodiments. Further, the metallic fitting of the insulator is not necessarily covered with the cover. Moreover, the crating according to the invention may be applied to various bushings, linepost insulator, stationpost insulator and the like in addition to the above longrod insulator and suspension insulator.

As mentioned above, in the insulator crating according to the invention, the plate-like members are fastened around the insulator through wires so as to expose the metallic fittings located at both end portions of the insulator from both ends of each of the plate-like members and at least one engaging member is arranged in each of the plate-like members, so that the mounting of the insulator or the like can be conducted at the crated state without unpacking and the damage or breakage of the insulator can be prevented during the transportation and the mounting and also the decrating operation can be simplified. Further, the material used can be reduced by 30% on average as compared with the conventional wooden box system, whereby the cost of the crating can be further reduced. Moreover, when the protective member such as vinyl sheet or the like is arranged inside the plate-like members, the porcelain portion of the insulator can be prevented from pollution during transportation and storage, and consequently the washing of the insulator can be omitted.

## Claims

1. An assembly of at least one insulator and a crating therefore, there being a single insulator (1) having a plurality of shed portions and a metallic fitting (1a) at each end or an array of insulators (7) arranged end-to-end with a metallic fitting (8,9) at each end of the array, wherein the crating comprises a plurality of plate-like members (2) each extending in the longitudinal direction of the insulator(s) (1;7) characterized in that said plate-like members (2) are arranged spaced apart around the insulator(s) (1;7) and at least two tying members (3) are adapted for fixing the plate-like members (2) to the insulator(s) (1;7), in that said metallic fittings (1a;8,9) extend beyond said plate-like members (2) in the longitudinal direction of the insulator(s) (1;7) to such an extent that at least one of said metallic fittings (1a;8,9) can be connected to a metallic fitting of another insulator or to another connecting element while the crating is still in place, and in that at least one of said plate-like members (2) is provided at its inside with at least one engaging member (5) fitting between adjoining shed portions of the insulator (1) or between adjoining insulators (7).

2. An assembly according to claim 1, wherein each said plate-like member (2) has a thickness of 3-15 mm and a width of 40-70 mm.

3. An assembly according to claim 1 or claim 2 wherein said plate-like members (2) are equally spaced apart around the insulator(s) (1;7).

4. An assembly according to any one of claims 1 to 3, wherein the spacing between the adjoining plate-like members (2) is 25-50 mm and the such total spacing between the plate-like members (2) is not more than 30% of the whole peripheral distance around said insulator(s) (1;7).

5. An assembly according to any one of claims 1 to 4, wherein said tying member (3) is a galvanized wire of 1.0-3.0 mm in diameter and the or each said engaging member (5) is a timber of 15-24 mm square.

6. An assembly according to any one of claims 1 to 5 wherein each said plate-like member (2) has at least one said engaging member (5).

## Patentansprüche

1. Anordnung aus zumindest einem Isolator und einer Verpackung dafür, wobei ein einzelner Isolator (1) mit einer Vielzahl von Schirmabschnitten und einer metallischen Armatur (1a) an jedem Ende oder eine Reihe von Isolatoren (7) vorhanden ist, die mit den Enden zueinander mit einer metallischen Armatur (8,9) an jedem Ende der Reihe angeordnet sind, worin die Verpackung eine Vielzahl von plattenartigen Elementen (2) umfaßt, die sich jeweils in Längsrichtung des/der Isolators/Isolatoren (1;7) erstrecken, dadurch gekennzeichnet, daß die plattenartigen Elemente (2) im Abstand voneinander um den/die Isolator(en) (1;7) angeordnet sind und zumindest zwei Bindeelemente (3) zum Befestigen der plattenartigen Elemente (2) an dem/den Isolator(en) (1;7) ausgebildet sind, daß die genannten metallischen Armaturen (1a;8,9) sich über die genannten plattenartigen Elemente (2) hinaus in Längsrichtung des/der Isolators oder Isolatoren (1;7) in einem solchen Ausmaß erstrecken, daß zumindest eine der genannten metallischen Armaturen (1a;8,9) mit einer metallischen Armatur eines anderen Isolators oder eines anderen Verbindungselements verbunden werden kann, während die Verpackung immer noch in Position ist, und daß zumindest eines der genannten plattenartigen Elemente (2) an seiner Innenseite mit zumindest einem Eingreifmittel (5) versehen ist, das zwischen benachbarte Schirmabschnitte des Isolators (1) oder zwischen benachbarte Isolatoren (7) paßt.

2. Anordnung nach Anspruch 1, worin jedes genannte plattenartige Element (2) eine Dicke von 3-15 mm und eine Breite von 40-70 mm aufweist.

3. Anordnung nach Anspruch 1 oder 2, worin die genannten plattenartigen Elemente (2) in gleichen Abständen zueinander um den/die Isolator(en) (1;7) angeordnet sind.

4. Anordnung nach einem der Ansprüche 1 bis 3, worin der Abstand zwischen den benachbarten plattenartigen Elementen (2) 25-50 mm beträgt und der derartige Gesamtabstand zwischen den plattenartigen Elementen (2) nicht mehr als 30% der gesamten peripheren Distanz um den/die genannten Isolator(en) (1;7) beträgt.

5. Anordnung nach einem der Ansprüche 1 bis 4, worin das genannte Bindeelement (3) ein verzinkter Draht mit 1,0-3,0 mm Durchmesser ist und das oder jedes genannte Eingreifelement (5) ein Holz mit 15-24 mm im Quadrat ist.

6. Anordnung nach einem der Ansprüche 1 bis 5, worin jedes genannte plattenartige Element (2) zumindest ein genanntes Eingreifelement (5) aufweist.

## Revendications

1. Ensemble d'au moins un isolateur et d'une caisse à claire-voie à cet effet, un isolateur individuel (1) présentant plusieurs portions de protection et un raccord métallique (1a) à chaque extrémité ou un ensemble d'isolateurs (7) disposés extrémité contre extrémité avec un raccord métallique (8,9) à chaque extrémité de l'ensemble, la caisse à claire-voie comprenant plusieurs éléments en forme de plaque (2) s'étendant chacun dans la direction longitudinale du ou des isolateur(s) (1,7) caractérisé en ce que lesdits éléments en forme de plaque (2) sont espacés et entourent le ou les isolateur(s) (1, 7) et au moins deux éléments de ficelage (3) sont adaptés pour la fixation des éléments en forme de plaque (2) aux isolateurs (1, 7), en ce que lesdits raccords métalliques (1a, 8, 9) s'étendent au-delà desdits éléments en forme de plaque (2) dans la direction longitudinale du ou des isolateurs (1, 7) de sorte qu'au moins un des dix raccords métalliques (1a, 8, 9) puisse être raccordé à un raccord métallique d'un autre isolateur ou à un autre élément de raccord alors que la caisse à claire-voie est encore en place et en ce qu'au moins un des éléments en forme de plaque (2) est muni sur sa face interne d'au moins un élément de prise (5) s'insérant entre des portions de protection adjacentes de l'isolateur (1) ou entre des isolateurs adjacents (7).

2. Ensemble selon la revendication 1 dans lequel chacun desdits éléments en forme de plaque (2) présente une épaisseur de 3 à 15 mm et une largeur de 40 à 70 mm.

3. Ensemble selon la revendication 1 ou la revendication 2 dans lequel lesdits éléments en forme de plaque (2) sont espacés à intervalles réguliers et entourent le ou les isolateur(s) (1,7).

4. Ensemble selon une des revendications 1 à 3 dans lequel l'intervalle entre les éléments adjacents en forme de plaque (2) est de 25 à 50 mm et un tel intervalle total entre les éléments en forme de plaque (2) n'excède pas 30% de la circonférence totale du ou desdits isolateurs (1, 7).

5. Ensemble selon une des revendications 1 à 4 dans lequel ledit élément de ficelage (3) est un câble galvanisé de 1,0 à 3,0 mm de diamètre et ledit élément de prise ou chacun des éléments de prise (5) est une planche en bois de 15 à 24 mm².

6. Ensemble selon une des revendications 1 à 5 dans lequel chacun desdits éléments en forme de plaque (2) possède au moins un desdits éléments de prise (5).
